# EUROPEAN PATENT APPLICATION

(11) **EP 4 607 346 A1**
(43) Date of publication of application: **27.08.2025**
(21) Application number: 25158041.1
(22) Date of filing: 14.02.2025
(51) Int. Cl.: G06F 9/455, G06F 21/50

(54) **VIRTUAL MACHINE ARCHITECTURE FOR ACCESSING A SECURE ELEMENT, AND CORRESPONDING METHOD FOR ACCESSING A SECURE ELEMENT**

(30) Priority: 23.02.2024 IT 202400003877
(71) Applicant: STMicroelectronics International N.V., 1228 Plan-les-Ouates, Geneva (CH)
(72) Inventor: ALFARANO, Marco, I-80078 Pozzuoli (Napoli) (IT); DUMELLA DE ROSA, Gennaro, I-80145 Napoli (IT); TERRONE, Luigi, I-84086 Roccapiemonte (Salerno) (IT); VENEROSO, Amedeo, I-81100 Caserta (IT)
(74) Representative: Buzzi, Notaro & Antonielli d'Oulx S.p.A.

(57) **Abstract**

An architecture comprising a plurality of guest virtual machines managed by a hypervisor (12) running on a host computer (11), on which respective instances of a guest operating system (13ᵢ), in particular Android operating system, are executed, said architecture comprising at least a Secure Element (14) accessible by said plurality of virtual machines (13ᵢ), said hypervisor (12) being configured to receive (S110) a command (CA) from given guest operating system (13ᵢ)among said guest operating systems (13ᵢ)and to send (S125, S130) said command (CA) to a corresponding application (14a) in said Secure Element (14) and to send (S135, S140, S145, S150) a response (RA) to said command (RA) from said application (14a) in said Secure Element (14) to the given guest operating system (13ᵢ),
wherein
said hypervisor (12) is configured to, upon receiving a command (CA) from said given guest operating system (13ᵢ), to check (S120) if the current context (CC) correspond to a context associated to the command (CA), and if the result of the check is negative is configured to perform a context switching (S121-S124) procedure, before performing said operation of sending (S125, S130) said command (CA) to a corresponding application (14a) in said Secure Element (14).

## Description

### Technical field

The description relates to a virtual machine architecture comprising a plurality of guest virtual machines managed by a hypervisor running on a host computer, on which respective instances of a guest operating system, in particular Android operating system, are executed, said architecture comprising at least a Secure Element accessible by said plurality of virtual machines, said hypervisor being configured to receive a command from given guest operating system among said guest operating systems and to send said command to a corresponding application in said Secure Element and to send a response to said command from said application in said Secure Element to the given guest operating system.

One or more embodiments can be applied to Secure Element in integrated circuit cards such as, for instance, Universal Integrated Circuit Cards, UICCs or embedded UICCs, eUICCs.

### Background

In technical fields such as the automotive field, the Android architecture is requested to support multiple instances of Linux (or Linux-Android) executing in parallel in a virtual machine architecture.

A virtual machine architecture may be defined as an architecture comprising a set of virtual machines hosted, or managed, by a so-called hypervisor, i.e. a virtual machine monitor, on which respective instances of an operating system are executed, may be used. In this environment, if at least a Secure Element, i.e., a tamper-resistant platform (typically a one chip secure microcontroller) capable of securely hosting applications and their confidential and cryptographic data, in particular in accordance with the rules and security requirements set forth by a set of well-identified trusted authorities, is comprised in the architecture, a same Secure Element shall be accessible, for instance in terms of crypto services and key store services, by different virtual machines. An UICC (Universal Integrated Circuit Card) may represent a Secure Element, also as eUICC (Embedded UICC) or iUICC (Integrated Circuit Card).

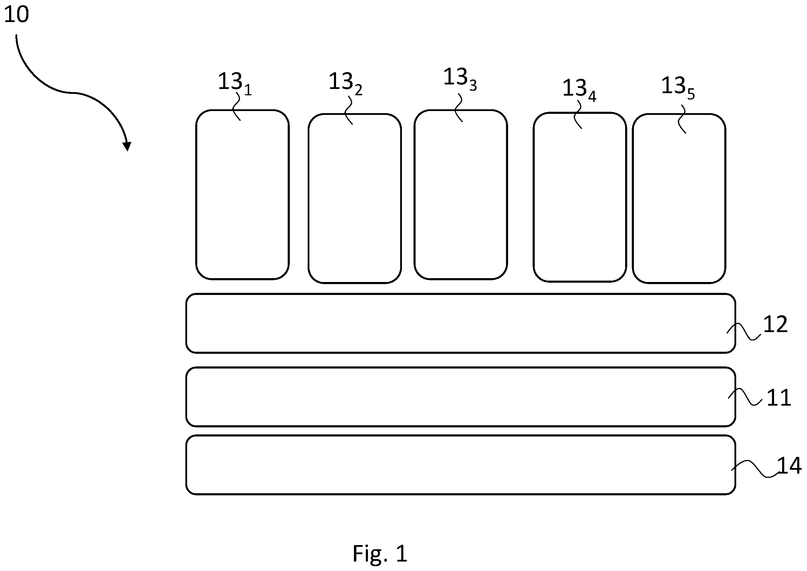

To this regard in figure 1 a virtual machine architecture 10 is shown schematically by way of example, which comprises a host 11, e.g., a processing unit, comprising for instance a CPU and volatile and nonvolatile memory, then the host 11 hosts a virtual machine monitor 12, also called hypervisor, as mentioned.

The hypervisor 12, in a manner known per se, by the virtualization process is able to create a set of guest virtual machines each running an instance, indicated with 13₁...13₅ in figure 1, of an operating system, for instance Android. A set refers here to a group of one or more elements, e.g., one or more virtual machines.

A Secure Element 14 is shown in figure 1, associated to the host 11 of the hypervisor 12, which can be represented for instance by an UICC.

Such virtual machine architecture 10 comprising a set of virtual machines may refer to a terminal, as host, e.g. a user terminal, which his interfaced to an integrated circuit card, e.g. a UICC as mentioned, by a terminal-card, or terminal-UICC interface, the UICC may represent such Secure Element 14. As mentioned, alternately, eUICC or iUICC, can embody the Secure Element 14, which also may be embodied by an eSE (embedded Secure Element) or an iSE (integrated Secure Element) .

The hypervisor 12 used to host multiple virtual machines, may comprise, in the automotive field, e.g., one virtual machine hosting an instance 13ᵢ of the operating system for each display (e.g., dashboard/infotainment). With i is indicated the index of the guest operating system, i.e. in figure 1 goes from 1 to 5.

The hypervisor 12 may run for instance on a System On Chip (SoC) which represents the terminal, i.e., the host 11, interfaced to a secure element or card 14. This in particular in an automotive embodiment, although in general the terminal corresponding to the host 11 can be another device with a processing unit or microcontroller.

In particular a virtual machine architecture as just described represents a multi-application capable terminal, i.e. a terminal that can support more than one first level application with possibly separate user verification requirements for each application. The applications seen by the terminal are first level applications (e.g. SIM, USIM). In the context of Secure Elements, e.g., integrated circuit cards or Secure Elements, Logical Secure Element (LSE) are secure element functionalities, applications and files grouped together to act like a secure element (e.g. UICC) when multiple Logical Secure Element interfaces are supported (see for instance the specification ETSI TS 102 221). A Logical Secure element Interface (LSI) is instead a logical connection between an endpoint in the terminal, e.g. SoC, running the hypervisor, and one Logical Secure Element or LSE.

Thus, for instance within the environment of the specification ETSI TS 102 221 it is possible to operate with Multiple Instances and Multiselectable Applets. It is in particular possible to create multiple instances of an Applet with different AIDs (Application Identifiers). As mentioned, Multiselectable Applets are Applets having the capability of being selected on multiple logical channels at the same time.

The common way a Hypervisor uses to manage a shared resource is a Shared Device in the Hypervisor, the access to resources by Guest OS 13 being not direct: requests are managed by the Hypervisor 14 and are serviced as they are. If two or more Guests 13 try to access a device at same time, that is prevented by using a queue-based approach: one request at time, which may also increase application runtime.

In a hypervisor architecture, applications running in guest OSs instances (virtualized) may have to be unaware of running within a not native OS instance and of accessing a shared resource, such as an eSE.

Considering the LSE based approach, i.e. using LSEs in the eSE, the previous way to access the eSE may not be correct.

In Secure Elements is made reference to context, which in Secure Elements is a set of Secure Element or eSE resources available for a specific entity (virtual machine,...), including applications, packages and corresponding data. In the Java Card Platform (as defined for instance in Java Card^{™} Platform Runtime Environment Specification, Classic Edition Version 3.1, at URL https://docs.oracle.com/javacard/3.1/related-docs/JCCRE/JCCRE.pdf) the context is for instance defined as a protected object space associated with each applet CAP (converted applet) file and Java Card Running Environment. All objects owned by an applet belong to the context associated with the applet's CAP file.

Then, context isolation is defined, for instance in the Java Card Platform, i.e., isolation of context meaning that one applet cannot access the fields or objects of an applet in another context unless the other applet explicitly provides an interface for access. Context isolation thus means, in the present description, also that a specific virtual machine can access only the set of resources available to it and the other entities cannot. Regarding context isolation, context switching is not managed at all, even if supported by the device, e.g., Java Card or eSE. Requests from different senders, e.g., guests operative systems, are seen as coming by just one sender. In other environments, like the Embedded SIM, the definition of context may extend to additional applicative data, like the file system structure or the user credentials (PINs) related to the current application. For what regards the guest operative systems instances which have to be unaware, if, by way of example, Linux Android instances have to deal with context switching by themselves, the principle of unawareness would be violated.

Thus the current virtualization architectures are not equipped to guarantee unawareness and full isolation of context for the guest operating systems in the virtualization architecture are guaranteed. In a hypervisor architecture, guest OSs instance (virtualized) may have to be unaware of being not native, in particular accessing a shared resource (e.g. eSE), with an LSE based approach. A guarantee of context isolation has to be given. If OS, e.g. Linux Android, instances deal with context switching by themselves, the principle of unawareness would be violated.

### Object and summary

An object of one or more embodiments is to contribute in providing solutions to guarantee unawareness and full context separation for the guest operating systems in the virtualization architecture.

According to one or more embodiments, that object is achieved via a virtual machine architecture having the features set forth in the claims that follow.

One or more embodiments concern a corresponding method of managing a Secure Element in a virtual machine architecture.

The claims are an integral part of the technical teaching provided in respect of the embodiments.

Solutions as described herein include a virtual machine architecture comprising a plurality of guest virtual machines managed by a hypervisor running on a host, on which respective instances of a guest operating system are executed, said architecture being configured to access at least a Secure Element by said plurality of virtual machines, said hypervisor being configured to receive a command (CA), in particular a command APDU, from at least an entity configured to send commands to a corresponding application in said Secure Element and to send said command to said corresponding application in said Secure Element and to send a response to said command from said application said Secure Element to said at least an entity,
wherein
said hypervisor is configured to, upon receiving a command from said at least an entity, to check if a current application context correspond to a context associated to the command, and if the result of the check is negative is configured to perform a context switching procedure, before performing said operation of sending said command to a corresponding application in said Secure Element.

In variant embodiments, said at least an entity comprises a given guest operating system among said guest operating systems.

In variant embodiments, said at least an entity comprises a software agent configured to operate in said hypervisor and to send commands to said corresponding application in said Secure Element.

In variant embodiments, said hypervisor comprises a driver of the Secure Element associated to said guest operating system through a respective virtual device and a dispatcher module also comprised in said hypervisor, the virtual device being configured to pass commands, and responses between the said guest operating system and the Secure Element through said dispatcher module.

In variant embodiments, said dispatcher module is configured, upon receiving a said command from the virtual device to perform said operation of checking if the current context correspond to a context associated to the command, and if the result of the check is negative is configured to send a context switch signal, in particular a context switch command, to the driver which is configured to forward said context switch signal to the application in the Secure Element, then upon receival from the application of a context response, the driver is configured to supply a context changed signal to the dispatcher, which then is configured to perform said operation of sending said command to a corresponding application in said Secure Element and change its context information.

In variant embodiments, said dispatcher may be configured to operate according a scheduling priority assigning different priorities to different of such guest operating systems and is configured to manage the commands according to a FIFO policy if they have the same priority and to apply a prioritization scheme when a command or commands are received from a guest operating systems having a higher priority.

In variant embodiments, said architecture comprises a set of Logical Secure Elements in said Secure Element.

In variant embodiments, said guest operating systems are Android operating systems.

Solutions as described herein refer also to a method for operating an architecture according to embodiments, comprising receiving a command from a given guest operating system among said guest operating systems and sending said command to a corresponding application in said Secure Element and sending a response to said command from said application in said Secure Element to the given guest operating system, wherein said method comprises
upon receiving a command from said given guest operating system at the hypervisor checking if the current context correspond to a context associated to the command, and if the result of the check is negative performing a context switching procedure, before performing said operation of sending said command to a corresponding application in said Secure Element.

In variant embodiments, said method comprises passing commands and responses between said guest operating system and the Secure Element through said dispatcher module.

In variant embodiments, upon receiving a said command from the virtual device performing said operation of checking at the dispatcher module if the current context correspond to a context associated to the command, and if the result of the check is negative sending a context switch command to the driver, which forwards said context switch command to the application in the Secure Element, then upon receival from the application of a context response, supplying a context changed signal to the dispatcher, then performing said operation of sending said command to a corresponding application in said Secure Element.

In variant embodiments, said method comprises implementing a scheduling priority assigning different priorities to different of said guest operating systems and managing the commands according to a FIFO policy if they have the same priority and applying a prioritization scheme when a command or commands are received from a guest operating systems having a higher priority.

In variant embodiments, said method comprises accessing a set of Logical Secure Elements in said Secure Element, accessible from said guest operating systems.

### Brief description of the figures

One or more embodiments will now be described, by way of example only, with reference to the annexed figures, wherein:
- Figure 1 has already been described in the foregoing;
- Figure 2 shows schematically a virtual machine architecture detailing the operating system, the hypervisor and the host;
- Figure 3A shows a first portion of the virtual machine architecture according to the solution here described pertaining the host and the Secure Element;
- Figure 3B shows a second portion of the virtual machine architecture according to the solution here described pertaining the hypervisor, the virtual machines and the Secure Element;
- Figure 4 shows a protocol diagram showing operations performed by second portion of the virtual machine architecture according to the solution here described;

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular configurations, structures, or characteristics may be combined in any adequate way in one or more embodiments.

The headings/references used herein are provided merely for convenience and hence do not define the extent of protection or the scope of the embodiments.

For simplicity and ease of explanation, throughout this description, and unless the context indicates otherwise, like parts or elements are indicated in the various figures with like reference signs, and a corresponding description will not be repeated for each and every figure.

therefore an automatic context switcher at hypervisor level solves this problem.

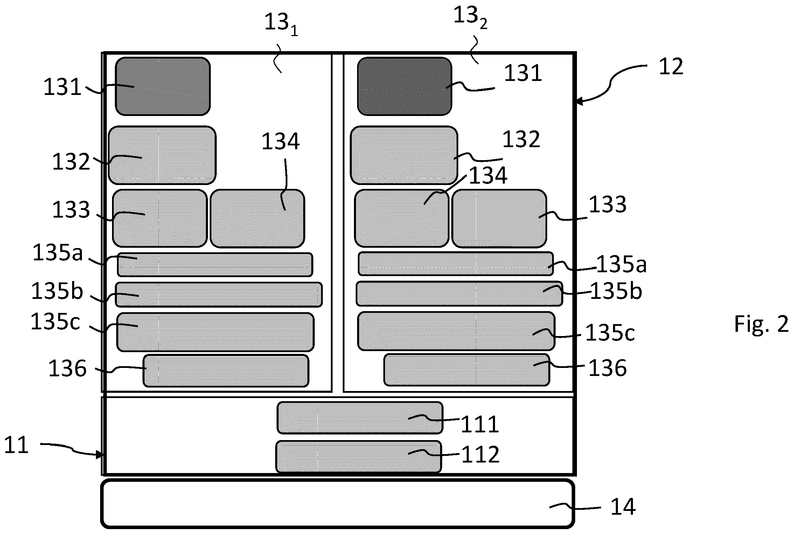

In figure 2 it is shown a virtual machine architecture 10 in further detail. In figure 2 the hypervisor which runs in the host 11 manages two virtual machines respectively running a first Android operating system 13₁ and a second operating system 13₂.

Each of these operating systems 13₁ and 13₂ comprises respective applets 131 and also a keystore 132, in particular an Android keystore, which stores cryptographic keys in a container to make them more difficult to extract from the device, then a Keymint Hardware Abstraction Layer 133, Keymint providing cryptographic services in a hardware-isolated environment and a Weaver Hardware Abstraction Layer 134, which provides a fixed number of slots for storing user data. Thus the operating systems 13₁ and 13₂ comprise a number of modules for cryptographic keys and authorizations. Also the operating systems 13₁ and 13₂ comprise a series of OMAPI (Open Mobile API) module comprising the OMAPI API (Application Programming Interface) 135a, an Internal OMAPI Client 135b, an OMAPI framework 135c.

The operating systems 13₁ and 13₂ then comprise a Secure Element Hardware Abstraction Layer Front End 136, which, as explained in the following, represents the front end of a virtual device vdev, e.g. such as the VirtIO vdev.

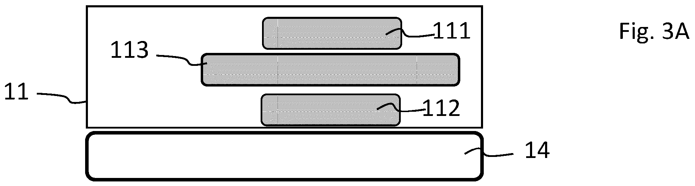

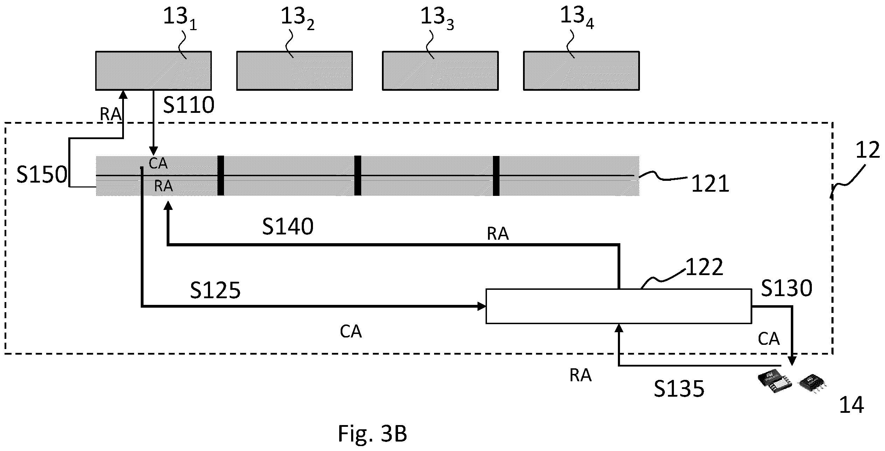

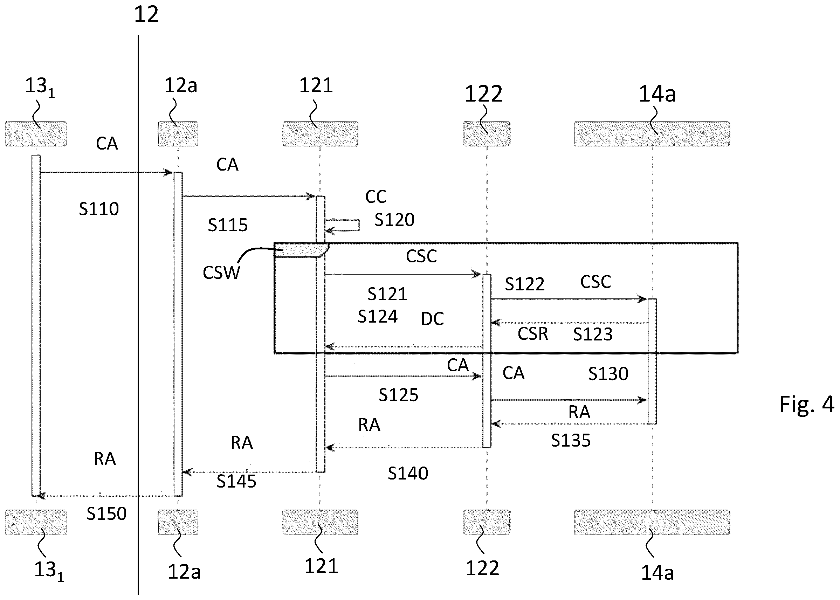

The host 11 in its turn comprises a Secure Element Hardware Abstraction Layer Back End 111 to communicate with
the operating system Secure Element Hardware Abstraction Layer Front End 136, i.e. implementing the back end of the virtual vdev, when for instance the guest operating system 13₁ or 13₂ request to access the Secure Element 14 (as it will be explained in the following, in figures 3 and 4, for instance with reference to request or command CA).

Under this view the host 11 also comprises a Secure Element SPI (Serial Parallel Interface) Driver 112 to drive the interface with the Secure Element 14 for accessing the Secure Element.

To this last regard, in figure 3A it is shown schematically a first portion of the virtual machine architecture here described. It is shown the host 11, which includes the Secure Element Hardware Abstraction Layer Front End 111 and the Secure Element SPI (Serial Parallel Interface) Driver 112 to drive the interface with the Secure Element 14 for accessing the Secure Element, but also a Logical Secure Element Manager module 114 which is configured to manage Logical Secure Elements in such Secure Element 14, according for instance to the TS ETSI specification 102.221.

In Figure 3B is shown instead a second portion of the architecture detailing the interaction between the guest operating systems 13ᵢ, the hypervisor 12, which runs in the host 11, and the Secure Element 14. Thus, in figure 2 it can be seen how in a step S110 a guest OS, e.g., 13₁, sends a command, or a request, for an applet, specifically an APDU (Application Data Unit) command CA to a dispatcher module 121 comprised in the hypervisor 12. As better detailed in the protocol diagram of figure 4, the command CA is sent to a virtual device 12a of the hypervisor 12.

The dispatcher module 121 sends in an operation S125 the command CA to a driver module 122 which may operate also as context switcher, as better explained in figure 4, with reference to operations S120-S124.

The driver 122 is configured to send in an operation S130 the command CA, i.e. the command APDU, to the corresponding applet 14a in the Secure Element 14, which in turn replies in an operation S135 with a corresponding response RA, also a Response APDU.

The driver 122 then sends in an operation S140 the response RA to the dispatcher 121 which in turn sends in an operation 150 the response RA to the guest operating system 13₁.

In figure 4 it is better detailed the operation of the method here described, by a protocol diagram, indicating the nodes, i.e., modules or components 13₁, 12, 121, 122, 14a, and the operations S110-S150 which determine actions and transactions between such nodes.

As indicated, the guest OS, e.g., 13₁, sends a command CA, in particular a command APDU, to the hypervisor 12, namely to a virtual device, usually called vdev in the virtualization technical field, which in the guest OS, e.g., 13₁, corresponds as front end to the Secure Element Hardware Abstraction Layer Front End 136 cooperating with the back end 111 in the hypervisor 12. A virtual device is a device existing in the virtualized environments, which can emulate a physical device, or it can provide functionality like that provided by a physical device without emulating any specific physical device. To use a virtual device vdev, the guest OS 13₁ requires a driver, i.e. driver 122 just as it would require a driver to use a physical device in a non-virtualized environment. The virtual device vdev of the hypervisor 12 operates as an intermediary that both responds directly to the guest OS 13₁ and passes requests, i.e. command CA, and responses, i.e. responses RA, between the guest OS 13₁ and a physical device, in this case the Secure Element 14.

Thus, the virtual device vdev 12a, e.g. implemented by the front end 136 of the guest operating system 13ᵢ, cooperating with the back end, i.e. Secure Element Hardware Abstraction Layer Front End 111 of the hypervisor 12, then sends in an operation S115 the command CA to a dispatcher module 122. The dispatcher module 121 is a module specifically provided according to the solution here described in the hypervisor 12 to forward commands CA, in particular APDUs, sent from the virtual machine, i.e. the guest OS, e.g., 13₁ and to driver module 122 or to other modules, such as an interpreter.

At the dispatcher module 121 it is performed an operation S120 of getting a current context CC, in particular application context, and checking if the context involved by the command CA is the same. For instance, the hypervisor, in particular specifically the dispatcher module 121, can check the sender of the command CA. If the current command CA has the same sender, for instance the context involved is the same.

In the affirmative, as shown in figure 3, the command CA is sent to the driver 122 in an operation S125 and then from there in an operation S130 to the corresponding applet, or application, 14a in the Secure Element 14. Then applet 114 then replies S135 with the corresponding response RA, i.e. the corresponding Response APDU, to the driver 122 which sends S140 the response RA to the dispatcher 121, which in in its turn, send S145 the response RA to the virtualization device 12a of the hypervisor 12, which in its turn sends S150 the response RA to the guest OS 13₁ which has issued the command CA.

If the operation S120 gives instead a negative outcome, i.e. the context of the incoming command CA it is not the same context in which the applet 14a was currently operating the dispatcher 121 is configured to perform an alternative operation, i.e. sending S121 a context switch signal, in the exemplary embodiment a context switch command, CSC, i.e. a context switch APDU such as MANAGE LSI, to the driver 122 which then forwards it, operation S122, to the applet 14a in the Secure Element 14. In particular, regarding performing operation S122 of forwarding the context switch command CSC, such context switch command CSC, may be forwarded to the Secure Element 14 in which the applet 14a is stored, where the applet 14a is managed by the Secure Element or by the operating system of the Secure Element. In embodiments the application or applet 14a may be configured to manage the context switch command CSC. The applet 14a then receives and executes the incoming command CA. The Secure Element comprising the applet 14a sends S123 then a context response CSR, also an APDU, to the driver 122, which then supplies S124 a context changed signal DC to the dispatcher 121. In other words, the dispatcher 121 is configured to retain the last context selected in the Secure Element through a context switch command CSC, e.g., MANAGE LSI, thus it retains e.g., that the last MANAGE LSI selected context related to the virtual machine 13₁. The switch command signal CSC, such as MANAGE LSI, may be an operating system command of the Secure Element. Then, if a command CA is received from Virtual machine 13₂ the dispatcher 121 sends another context switch command CSC, e.g., MANAGE LSI. After operations S121-S124 - comprised in a context switch procedure CSW indicated by a square in figure 4 encompassing such operations S121-S124 - which the dispatcher 121 is configured to execute only if the operation S120 gives a negative outcome, i.e., the current context CC is not the same associated to the command CA, the dispatcher 122 is configured to resume operation S125 of sending to the driver 122 the command CA, and operation S130, S135, S140, S145, S150, follow as indicated above.

In embodiments, if the context switch command CSC is an APDU (MANAGE LSI), the dispatcher 121 is further configured to perform a filtering, hindering the other guest virtual machines to send that specific APDU. If another virtual machine tries to execute the MANAGE LSI APDU, it is intercepted and discarded by the Dispatcher 121. This makes not possible for the other virtual machines to access to the other Logical Secure Elements.

In embodiments, the the context switch signal CSC may not be represented by an APDU, as for instance in implementation of the Logical Secure Elements to switch is used the node address, e.g. NAD, which is for instance set to '1' for APDUs for a first logical Secure Element and to '2' for APDUs for a second Logical Secure Element. Thus the command CA comprises an indication of the context, in particular in a node address portion, NAD of the command CA- which, being a byte which identifies the source and the intended destination of a block, in particular the command, and which may also be used to distinguish between different LSI, is in particular also handled by the Secure Element 14 - and the dispatcher module 121 is configured, upon receiving said command CA from the virtual device 12a, to perform the operation of checking S120 if the current context CC correspond to a context associated to the command CA on said indication of context, and if the result of the check is negative is configured to send S121 said context switch signal CSC to said driver 122 which is configured to forward S123 said context switch command CSC to the application 14a in the Secure Element 14. The context switch signal CSC is in this case the NAD information, which is part of each command even if two consecutive commands or APDUs are sent on the same LSI, which indicates the correct LSE for the command CA. Then, the application 14a issues a context response CSR and the driver 12) is configured to supply S124 a context changed signal DC, for instance when the context switch command is an APDU, the command returns a switch, to the dispatcher 121, which then is configured to perform said operation of sending S125, S130 said command CA to a corresponding application (14a) in said Secure Element (14).

Thus according the solution here described, with respect to normal operation, the dispatcher 122 is configured, upon receiving a command CA, from an entity, in particular a guest operating system 13ᵢ, in particular a command APDU, to check (operation S120) if the context is the same and in the negative to perform a context switching procedure sending a command, the context switch command, CSC, i.e. a context switch APDU, to the driver 122 which in this case is further configured to perform a context switch, sending the context switch command, CSC, to the applet 14a. Then, when the applet sends S123 the context response CSR, the driver 122 is configured to send the context changed signal DC to the dispatcher 121.

Shared I/O problem in terms of APDU (Application Protocol Data Unit) to and from the Secure Element 14 may be managed within the hypervisor with a Data Unit scheduler/dispatcher, which is a variant embodiment of the dispatcher 121, differing from such dispatcher 121 in that also includes a prioritization scheme assigning priorities to the various guests operating systems 13ᵢ. This priorities are specific to the dispatcher, i.e., they may be different from the one used by the guest operating systems to obtain the virtual CPU in the virtual machine.

For instance a prioritization scheme may provide assigning priorities so that:
- by default, the hypervisor 12 serves the requests, i.e. command CA, in the order they arrived (FIFO, First in - First out);
- in case of a higher priority Guest/User (administrative / car manufacturer...), i.e., a guest operating system 13ᵢ to which in the scheme is assigned a higher priority, this is taken into account modifying the order in which the request are served, to server earlier (e.g. first) the request, i.e. command CA, from the guest operating system with the higher priority. This preferably is done implementing algorithm to avoid monopolization of execution of the requests, i.e. access to the Secure Element 14, by the higher priority guest operating systems.

Thus, in summary, the virtual machine architecture here described, comprising a plurality of guest virtual machines managed by a hypervisor, or virtual monitoring module, e.g., 12 running on a host computer, e.g., 11, on which respective instances of a guest operating system, e.g., 13ᵢ, in particular Android or Linux operating system, are executed, such architecture comprising at least a Secure Element, e.g., 14, such as a UICC, accessible by said plurality of guest virtual machines, e.g., 13ᵢ, said hypervisor, e.g., 12 being configured to receive, e.g., operation S110, a command, e.g., CA, in particular a command APDU, from an entity, preferably a given guest operating system, e.g., 13ᵢ, among said guest operating systems, e.g., 13ᵢ, and to send, e.g., operations S125, S130 said command, e.g., CA, to a corresponding application, e.g., 14a, in said Secure Element, e.g., 14 and to send, e.g., operations S135, S140, S145, S150 a response, e.g., RA to said command, e.g., RA, from said application, e.g., 14a in said Secure Element, e.g., 14 to such entity, preferably a given guest operating system, e.g., 13ᵢ. According to the solution here described the hypervisor, e.g., 12 is configured to, upon receiving a command, e.g., CA from said entity, e.g., given guest operating system, e.g., 13ᵢ, to check, e.g., S120 if the current context, e.g., application context CC, in particular comprising a set of Secure Element , e.g., 14, resources available for a specific entity, corresponds to a context associated to the command, e.g., CA, and if the result of the check is negative is configured to perform a context switching, e.g., S121-S124 procedure, before performing said operation of sending, e.g., operations S125, S130, said command, e.g., CA, to a corresponding application or applet, e.g., 14a in said Secure Element, e.g., 14.

As mentioned, the entity sending the command CA can be represented also by a software agent operating in the hypervisor 12, as long as is a software module which sends commands CA to a corresponding application or applet, i.e., a software agent which sends a command CA (and receive the response RA as well) from within the Hypervisor 12, e.g., to update the Secure Element operating system. Such a hypervisor agent may thus send the command CA to any of the Logical Secure Elements in the Secure Element.

Also, the said hypervisor, e.g., 12 comprises a driver module, e.g., 122 of the Secure Element, e.g., 14 associated to said guest operating system, e.g., 13ᵢ through a respective virtual device, e.g., 12a, and a dispatcher module, e.g., 121 also comprised in said hypervisor, e.g., 12, the virtual device, e.g., 12a, being configured to pass commands, e.g., CA, and responses, e.g., RA between the said guest operating system, e.g., 13ᵢ, and the Secure Element, e.g., 14, through said dispatcher module, e.g., 121.

The dispatcher module, e.g., 121 is configured, upon receiving said command, e.g., CA from the virtual device, e.g., 12a to perform said operation of checking, e.g., S120 if the current context, e.g., CC, in particular application context, corresponds to a context associated to the command, e.g., CA, and if the result of the check is negative is configured to send, e.g., S122 a context switch signal, e.g., context switch command CSC, for instance MANAGE LSI, to the driver, e.g., 122 which is configured to forward said context switch command, e.g., CSC to the application, e.g., 14a in the Secure Element, e.g., 14, in particular, the context switch command CSC, is forwarded to the Secure Element 14 in which the applet 14a is stored. Then upon receival from the application, e.g., 14a, in particular from the Secure Element comprising the application or applet 14a, of a context response, e.g., CSR, the driver, e.g., 122 is configured to supply, e.g., S124 a context changed signal DC to the dispatcher, e.g., 121, which then is configured to perform said operation of sending, e.g., S125, S130 said command, e.g., CA to a corresponding application, e.g., 14a in said Secure Element, e.g., 14.

The dispatcher, e.g., 121 is configured to perform a prioritization scheme, assigning different priorities to different of said guest operating systems, e.g., 13ᵢ and it is configured to manage the commands, e.g., CA according to a FIFO policy if they have the same priority and to apply a prioritization scheme which executes earlier a command from a higher priority guest operating system, e.g., 13ᵢ.

As explained, this architecture according to the solution here described preferably operates with a management of Logical Secure Elements (e.g., by module 113), according to specification ETSI 102.221 for instance, thus said virtual machine architecture comprises a set of Logical Secure Elements in said Secure Element, e.g., 14, which are accessible from said guest operating systems, e.g., 13ᵢ, in particular by said module 113 in the host 11.

Solutions as described herein, obtains unawareness and full context separation for the guest operating systems in the virtualization architecture are guaranteed. This because the context Switching is managed within the Hypervisor. This can be obtained as signed firmware (tampered proof).

Summing up, in a hypervisor architecture, guest OSs instance (virtualized), even if aware of being executed on a hypervisor, may have to be unaware of the presence of other guest OSs in the hypervisor, in particular accessing a shared resource (e.g. eSE), with an LSE based approach. A guarantee of context isolation has to be given. The solution supplies managing of context switching at the hypervisor level. Requests, i.e. APDU commands, from different senders (guests OSs) are seen as coming by just one sender.

Thus, a very relevant aspect is that each guest OS communicates only with applications for that guest OS and virtual machine, and the link is managed only by the Hypervisor, so that even if a virtual machine is a "malicious" virtual machine, it cannot talk to applications of another virtual machine.

The context switch is performed by the dispatcher module provided in the hypervisor according to the solution here described, i.e., it is performed in the hypervisor, that identifies the virtual machine originating a request and directs it to the proper logical Secure Element with (if needed) the context switch.

The Hypervisor is considered more trusted than the virtual machine as, e.g. typically in Android, the user can change the virtual machines by downloading a new version or a different distribution, but the user cannot change the Hypervisor.

If OS, e.g. Linux Android, instances have to deal with context switching by themselves, the principle of unawareness would be violated, therefore an automatic context switcher at hypervisor level solves this problem.

Without prejudice to the underlying principles, the details and the embodiments may vary, even significantly, with respect to what has been described by way of example only without departing from the scope of the embodiments.

The virtual machine architecture may comprise more than one secure element, which can be accessed by different subset of guest operating system running in corresponding virtual machines.

As mentioned the solution preferably applies to Secure Elements according to the specification ETSI TS 102 221 and may use commands within the meaning of GlobalPlatform Card Specification.

The extent of protection is determined by the annexed claims.

## Claims

1. A virtual machine architecture (10) comprising a plurality of guest virtual machines managed by a hypervisor (12) running on a host (11), on which respective instances of a guest operating system (13ᵢ), are executed, said architecture being configured to access at least a Secure Element (14) by said plurality of virtual machines (13ᵢ), said hypervisor (12) being configured to receive (S110) a command (CA), in particular a command APDU, from at least an entity (13ᵢ) configured to send commands (CA) to a corresponding application (14a) in said Secure Element (14) and to send (S125, S130) said command (CA) to said corresponding application (14a) in said Secure Element (14) and to send (S135, S140, S145, S150) a response (RA) to said command (RA) from said application (14a) in said Secure Element (14) to said at least an entity (13ᵢ),
wherein
said hypervisor (12) is configured to, upon receiving a command (CA) from said at least an entity (13ᵢ), to check (S120) if a current application context (CC) correspond to a context associated to the command (CA), and if the result of the check is negative is configured to perform a context switching (S121-S124) procedure, before performing said operation of sending (S125, S130) said command (CA) to a corresponding application (14a) in said Secure Element (14).

2. A virtual machine architecture (10) according to claim 1, wherein said at least an entity (13ᵢ) comprises a given guest operating system (13ᵢ) among said guest operating systems (13ᵢ).

3. A virtual machine architecture (10) according to claim 1 or 2, wherein said at least an entity (13ᵢ) comprises a software agent configured to operate in said hypervisor and to send commands (CA) to said corresponding application (14a) in said Secure Element (14).

4. The architecture of claim 2, wherein said hypervisor (12) comprises a driver (122) of the Secure Element (14) associated to said guest operating system (13ᵢ) through a respective virtual device (12a) and a dispatcher module (121) also comprised in said hypervisor (12), the virtual device (12a) being configured to pass commands (CA), and responses (RA) between the said guest operating system (13ᵢ) and the Secure Element (14) through said dispatcher module (121).

5. The architecture of claim 4, wherein said dispatcher module (121) is configured, upon receiving a said command (CA) from the virtual device (12a) to perform said operation of checking (S120) if the current context (CC) correspond to a context associated to the command (CA), and if the result of the check is negative is configured to send (S121) a context switch signal (CSC), in particular a context switch command (MANAGE LSI), to the driver (122) which is configured to forward said context switch signal (CSC) to the application (14a) in the Secure Element (14), then upon receival from the application (14a) of a context response (CSR), the driver (122) is configured to supply (S124) a context changed signal (DC) to the dispatcher (121), which then is configured to perform said operation of sending (S125, S130) said command (CA) to a corresponding application (14a) in said Secure Element (14).

6. The architecture of claim 4, wherein said dispatcher (121) is configured to perform a prioritization scheme, assigning different priorities to different of said guest operating systems (13ᵢ) and it is configured to manage the commands (CA) according to a FIFO policy if they have the same priority and to apply a prioritization scheme which executes earlier a command from a higher priority guest operating system (13ᵢ).

7. The architecture of any of the previous claims, wherein said architecture (10) is configured to access a set of Logical Secure Elements in said Secure Element (14), which are accessible from said guest operating systems (13ᵢ).

8. The architecture of any of the previous claims, wherein said guest operating systems (13ᵢ) are Android operating systems.

9. A method for operating an architecture according to any of claim 1 to 8, comprising receiving (S110) a command (CA) from at least a given entity (13ᵢ) and sending (S125, S130) said command (CA) to a corresponding application (14a) in said Secure Element (14) and sending (S135, S140, S145, S150) a response (RA) to said command (RA) from said application (14a) in said Secure Element (14) to the at least a given entity (13ᵢ), wherein said method comprises
upon receiving a command (CA) from said at least a given entity (13ᵢ) at the hypervisor (12) checking (S120) if the current context (CC) correspond to a context associated to the command (CA), and if the result of the check is negative performing a context switching (S121-S124) procedure, before performing said operation of sending (S125, S130) said command (CA) to a corresponding application (14a) in said Secure Element (14).

10. The method of claim 9, comprising passing commands (CA) and responses (RA) between said guest operating system (13ᵢ) and the Secure Element (14) through said dispatcher module (121).

11. The method of claim 10, wherein upon receiving a said command (CA) from the virtual device (12a) performing said operation of checking (S120) at the dispatcher module (121) if the current context (CC) correspond to a context associated to the command (CA), and if the result of the check is negative sending (S122) a context switch command (CSC) to the driver (122), which forwards said context switch command (CSC) to the application (14a) in the Secure Element (14), then upon receival from the application (14a) of a context response (CSR), supplying (S124) a context changed signal (DC) to the dispatcher (121), then performing said operation of sending (S125, S130) said command (CA) to a corresponding application (14a) in said Secure Element (14).

12. The method of claim 9, comprising implementing a prioritization scheme, assigning different priorities to different of said guest operating systems (13ᵢ) and it is configured to manage the commands (CA) according to a FIFO policy if they have the same priority and to apply a prioritization scheme which executes earlier a command from a higher priority guest operating system (13ᵢ).

13. The method of any of claims 9 to 12, comprising accessing a set of Logical Secure Elements in said Secure Element (14), accessible from said guest operating systems (13ᵢ).
